# EUROPÄISCHE PATENTSCHRIFT

(11) **EP 3 021 655 B1**
(45) Veröffentlichungstag und Bekanntmachung des Hinweises auf die Patenterteilung: **01.03.2017**
(21) Anmeldenummer: 15744920.8
(22) Anmeldetag: 30.07.2015
(51) Int. Cl.: A01B 61/04

(54) **AUFHÄNGUNGSVORRICHTUNG EINER LANDWIRTSCHAFTLICHEN MASCHINE**
SUSPENSION DEVICE OF AN AGRICULTURAL MACHINE
DISPOSITIF D'ACCROCHAGE D'UNE MACHINE AGRICOLE

(30) Priorität: 05.08.2014 DE 102014111136
(43) Veröffentlichungstag der Anmeldung: 25.05.2016
(73) Patentinhaber: Horsch Maschinen GmbH, 92421 Schwandorf (DE)
(72) Erfinder: HORSCH, Philipp, 92421 Schwandorf (DE)
(74) Vertreter: Benninger, Johannes
(86) Internationale Anmeldenummer: PCT/EP2015/067601
(87) Internationale Veröffentlichungsnummer: WO 2016/020273

(56) Entgegenhaltungen:
- EP-A1- 1 541 003
- EP-A1- 1 880 590
- DE-A1-102009 058 342

## Beschreibung

Die vorliegende Erfindung betrifft eine Aufhängungsvorrichtung einer landwirtschaftlichen Maschine mit den Merkmalen des unabhängigen Patentanspruchs 1.

Derartige Aufhängungsvorrichtungen bzw. landwirtschaftliche Maschinen mit derartigen Aufhängungsvorrichtungen sind bspw. aus der EP 1 060 649 B1 oder der EP 1 880 590 A1 bekannt geworden. Bei diesen aus dem Stand der Technik bekannten Vorrichtungen werden jeweils diverse Bodenbearbeitungs- und Säwerkzeuge an Schwenkarmen befestigt, so dass sich eine für den jeweiligen Verwendungszweck geeignete Werkzeuganordnung ergibt. Die Schwenkarme sind schwenkbar an sog. Flanschrohren gelagert, wobei die Schwenkarme Lagerabschnitte aufweisen, die das genannte Flanschrohr umgreifen, wobei zwischen den genannten Lagerabschnitten und den davon umgriffenen Abschnitten des Flanschrohres jeweils elastische Lagerelemente bzw. Quetschlagerelemente oder Gummielemente angeordnet sind.

Die Lagerabschnitte der Schwenkarme sowie das darin aufgenommene Flanschrohr besitzen in der Regel eine quadratische Kontur und sind zueinander in Ausgangsstellung um ca. 45° verdreht, so dass vier dreieckförmige Aufnahmekammern für jeweils ein Lagerelement entstehen. Jedoch sind auch andere Kombinationen zwischen Flanschrohr und Lagerabschnitt wie bspw. dreieckförmige Konturen möglich und bekannt.

Ein Problem bei derartigen Aufhängungsvorrichtungen liegt oftmals in deren Stabilisierung und Führung zwischen den Lagerabschnitten und dem Flanschrohr. Durch eine unsymmetrische Anordnung von Bodenbearbeitungs- oder Säwerkzeugen am Schwenkarm, beispielsweise bei einer Schiefstellung von Scharscheiben gegenüber der Fahrtrichtung, oder in Bezug auf eine senkrechte Ebene zu dieser, ergeben sich zum Teil große Quer- und Seitenkräfte, woraus nicht unerhebliche Kippmomente resultieren, welche die Aufhängungsvorrichtungen bzw. die Schwenkarme seitlich kippen oder verdrehen lassen. Durch dieses Kippen bzw. durch diese Schrägstellung hat der Schwenkarm darüber hinaus das Bestreben, sich quer zur Fahrtrichtung bzw. parallel zum Flanschrohr auf diesem zu verschieben. Weiter haben die elastischen Lagerelemente das Bestreben, aus den Lagerabschnitten herauszuwandern.

Durch die EP 1 880 590 A1 wird bereits ein Lösungsansatz zur Behebung der oben genannten Probleme vorgeschlagen. Hierzu sind die elastischen Lagerelemente nicht wie in der Regel üblich zylinderförmig, sondern zumindest teilweise kegelstumpfförmig ausgestaltet, insbesondere an ihren Endbereichen. Hierdurch ergeben sich in den jeweiligen Endbereichen des Lagerabschnittes größere Vorspannkräfte, wodurch nicht nur eine verbesserte seitliche Abstützung erreicht, sondern auch ein Herauswandern der Lagerelemente vermieden werden soll. Nachteilig an einer derartigen Gestaltung ist jedoch, dass zwar die seitliche Abstützung verbessert wird, jedoch nach wie vor die Möglichkeit des Verdrehens vorhanden bleibt. Ebenso kann es durch die Materialgüte der Lagerelemente vorkommen, dass die Kraft für die seitliche Abstützung nicht ausreichend ist. Eine Erhöhung der Materialgüte bzw. der Materialhärte könnte dem zwar entgegenwirken, doch besteht dann wiederum die Gefahr, dass keine ausreichende Schwenkbewegung der Aufhängungsvorrichtung gegenüber dem Flanschrohr mehr gewährleistet werden kann, da die Vorspannkräfte zu groß sind.

Weiter ist in der EP 1 541 003 A1 eine Überlastsicherung, insbesondere für ein Bodenbearbeitungswerkzeug, mit einer elastischen Lagerung offenbart, wobei die elastische Lagerung aus elastischen Lagerelementen und zwei Lagerschalen besteht und an der unteren Lagerschale ein Stiel mit einer Scheibe zur Bodenbearbeitung befestigt ist. Die elastischen Lagerelemente weisen im nicht montierten Zustand einen im Wesentlichen runden Querschnitt mit mindestens einer längsseitigen Abflachung auf. Durch diese Abflachung sollen die elastischen Materialeigenschaften der Lagerelemente verbessert werden; ebenso wird durch eine derartige Ausgestaltung der Lagerelemente versucht, die seitliche Abstützung zu verbessern.

In der DE 10 2009 058 342 A1 ist eine Aufhängevorrichtung einer Landmaschine offenbart, die sich insbesondere für Bodenbearbeitungswerkzeuge eignet. Die Vorrichtung umfasst zumindest einen das Maschinenteil tragenden Schwenkteil sowie einen Schwenkteilträger, an dem der Schwenkteil schwenkbar gelagert ist. Der Schwenkteil kann den Schwenkteilträger mit einem Lagerabschnitt umgreifen, und zwar derart, dass zwischen dem Lagerabschnitt des Schwenkteils und dem Schwenkteilträger Lagerkammern ausgebildet werden. Den Lagerkammern können elastische Lagerelemente zugeordnet sein, die bei einem Verschwenken des Schwenkteils eine zumindest teilweise elastische Verformung erfahren. Bei dieser bekannten Aufhängung ergeben sich aber die Nachteile, dass die Kräfte der seitlichen Abstützung von der Materialgüte bzw. der Shore-Härte der Lagerelemente abhängig sind. Das bedeutet, dass zwar mit einer größerer Shore-Härte die seitliche Abstützung verbessert werden könnte, jedoch in diesem Fall die Schwenkmöglichkeiten verringert werden, da aus der größeren Shore-Härte auch größere Vorspannkräfte resultieren.

Ebenso sind Aufhängungsvorrichtungen bekannt, bei denen das Flanschrohr und die Innenfläche der Lagerschalen den gleichen Querschnitt aufweisen, so dass die Innenfläche der Lagerschale radial um das Flanschrohr schwenken kann und dadurch seitlich abgestützt wird. Jedoch kann sich auch bei einer derartigen Ausgestaltung die Aufhängungsvorrichtung axial verschieben; ebenso müssen hierbei die Maße des Flanschrohr und der Lagerschalen exakt eingehalten werden, was sehr aufwendig und kostenintensiv ist.

Angesichts des bekannten Standes der Technik liegt der Erfindung die Aufgabe zugrunde, eine einfach aufgebaute Aufhängungsvorrichtung einer landwirtschaftlichen Maschine mit elastischen Lagerelementen zu schaffen, bei der auch bei starken Quer- und Seitenkräften eine ausreichende seitliche Führung bzw. Abstützung gewährleistet ist, ein seitliches Verschieben auf einem Maschinenrahmen bzw. einem Flanschrohr verhindert wird und ein Herauswandern der Lagerelemente aus den Lagerabschnitten unterbunden wird.

Die Aufgaben der Erfindung werden mit dem Gegenstand des unabhängigen Anspruchs 1 erreicht. Merkmale vorteilhafter Weiterbildungen der Erfindung ergeben sich aus den davon abhängigen Ansprüchen. Zur Lösung der gekannten Aufgabe schlägt die Erfindung eine Aufhängungsvorrichtung vor, der zumindest ein zusätzliches Führungselement zugeordnet ist, welches ein- oder mehrteilig ausgebildet ist, und das zumindest eine Führungs- und/oder Gleitfläche zur seitlichen Abstützung und Führung der Werkzeuganordnung aufweist.

Die Erfindung betrifft eine landwirtschaftliche Maschine zur Montage und elastischen Lagerung einer Werkzeuganordnung zur Bodenbearbeitung und/oder zur Aussaat, mit zumindest einem die Werkzeuganordnung tragenden Schwenkarm, der mittels wenigstens eines Lagerabschnittes elastisch und/oder schwenkbar an einem sich vorzugsweise quer zur Arbeitsrichtung erstreckenden Trag- oder Flanschrohr der landwirtschaftlichen Maschine gelagert ist. Der Lagerabschnitt umgreift das Trag- oder Flanschrohr umfangsseitig und in einer etwa koaxialen Ausrichtung zu dem Trag- oder Flanschrohr. Zwischen dem Lagerabschnitt und dem davon umgriffenen Abschnitt des Trag- oder Flanschrohres ist zumindest ein elastisches Lagerelement vorgesehen, das sich mit seiner Längsachse im Wesentlichen parallel zu der Schwenkachse des Schwenkarmes und der Längsachse des Trag- oder Flanschrohres erstreckt und durch Schwenkbewegungen des Schwenkarmes eine zumindest teilweise Verformung erfährt. Der Aufhängungsvorrichtung ist zumindest ein zusätzliches Führungselement zugeordnet, welches ein- oder mehrteilig gebildet ist und zumindest eine Führungs- und/oder Gleitfläche aufweist. Bei einer einteiligen Gestaltung des Führungselement, bspw. als Ringelement, weist bspw. dessen innere Kontur bzw. Führungsfläche zumindest abschnittsweise eine im Wesentlichen gleiche Kontur und/oder einen im Wesentlichen gleichen Querschnitt wie die Flanschfläche des Flanschrohres auf. Wahlweise kann die äußere Kontur bzw. Führungsfläche des Führungselements zumindest abschnittsweise eine im Wesentlichen gleiche Kontur und/oder einen im Wesentlichen gleichen Querschnitt wie die Lagerfläche der Lagerabschnitte aufweisen. Somit dienen die innere Kontur und/oder die äußere Kontur jeweils als Führungs- bzw. Gleitflächen. Das wenigstens eine Führungselement ist also derartig gestaltet, dass es die durch die Quer- bzw. Seitenkräfte auftretende axiale Verschiebung bzw. Verdrehung weitgehend unterbindet und bspw. eine Gleitlagerung bildet. Der Aufhängevorrichtung und/oder dem Führungselement können darüber hinaus Befestigungsmittel zugeordnet sein, mittels welchen ein axiales Verschieben unterbunden wird, wobei das Führungselement und das Befestigungsmittel wiederum eine Einheit bilden können. Durch die im Wesentlichen gleichen Konturen und/oder Querschnitte der Flanschfläche zum Flanschrohr oder der Führungsfläche zu den Lagerabschnitten des Führungselements ergibt sich vorzugsweise eine Gleitlagerung. Durch das Führungselement bzw. durch die Gleitlagerung können die auf die Werkzeuganordnung wirkenden Quer- bzw. Kippkräfte aufgenommen werden. Das Führungselement weißt hierzu vorzugsweise eine größere Härte als die elastischen Gummielemente auf.

Weiter kann das Führungselement mehrteilig gebildet sein und sich bspw. aus einem inneren Führungssegment und einem äußeren Stützsegment zusammensetzen. Das Führungssegment kann hierbei eine innere Kontur aufweisen die zumindest abschnittweise die im Wesentlichen die gleiche Kontur und/oder Querschnitt wie die Flanschfläche des Flanschrohres aufweist. Das Stützsegment kann wiederum eine äußere Kontur aufweisen, welche die zumindest abschnittweise im Wesentlichen gleiche Kontur und/oder Querschnitt wie die Lagerfläche der Lagerabschnitte aufweist. Darüber hinaus besitzt das Führungssegment eine äußere Kontur bzw. eine Gleitfläche und das Stützsegment ein innere Kontur bzw. eine Gleitfläche welche die weitgehend gleiche Kontur und/oder Querschnitt aufweisen, wodurch sich eine Gleitlagerung ergibt bzw. das Führungssegment und das Stützsegment aufeinander gleiten können.

Die Erfindung sieht ein Flanschrohr vor, das bspw. Teil einer Rahmenkonstruktion einer landwirtschaftlichen Maschine ist, an welcher in Abständen zueinander und ggf. über mehrere Reihen versetzt zueinander eine Vielzahl erfindungsgemäßer Aufhängungsvorrichtungen mit daran angebrachten Werkzeuganordnungen montiert sein können. Das Flanschrohr kann eine im Wesentlichen quadratische Kontur und/oder Querschnitt aufweisen, jedoch wären auch wenigstens abschnittsweise zylindrische oder dreieckige oder dergl. Konturen oder Querschnitte bzw. jede denkbar beliebige Form möglich. Es sei in diesem Zusammenhang darauf hingewiesen, dass das Trag- oder Flanschrohr grundsätzlich auch durch ein Vollmaterial oder durch ein offenes Profilteil (z.B. T-Profil o. dgl.) gebildet sein kann. Wenn also der Begriff des Rohres verwendet wird, der grundsätzlich ein geschlossenes Hohlprofil meint, so ist dies im Zusammenhang der vorliegenden Erfindung nicht einschränkend dahingehend zu verstehen, dass das Trag- oder Flanschrohr nicht auch ein Vollprofil oder ein offenes Profil sein kann.

Die Aufhängungsvorrichtung besteht bspw. aus einem oberen und einem unteren Lagerabschnitt, welche jeweils weitestgehend die gleiche Kontur wie das Flanschrohr aufweisen. Die oberen und die unteren Lageabschnitte der Aufhängevorrichtung verfügen in der Regel über einen größeren Querschnitt als das Flanschrohr. Zudem ist an zumindest einem der Lagerabschnitte ein Schwenkarm angebracht. An diesem werden je nach gewünschtem Einsatzgebiet die verschiedenen Bodenbearbeitungs- und oder Säwerkzeuge montiert, so das sich diverse verschiedene Werkzeuganordnungen ergeben können. Bei den Werkzeuganordnungen kann es sich um Säschare, wie bspw. Einscheibenschare oder Doppelscheibenschare oder Sechhalter oder Zinkenhalter oder dergl. handeln.

Die Lagerabschnitte bzw. der Schwenkarm sind in Grundstellung verdreht, bspw. in einem Winkel von ca. 45°, zum Flanschrohr angeordnet. In den sich dadurch ergebenden, parallel zum Flanschrohr erstreckenden Frei- bzw. Hohlräumen sind je nach Querschnitt der Lagerabschnitte zwei, drei oder mehr elastische Lagerelemente, vorzugsweise in Form von sog. Gummischnurelementen eingelegt. Über diese Lagerelemente ist der Schwenkarm radial mit dem Flanschrohr schwenkbeweglich verbunden. Diese Schwenkbeweglichkeit wird von verschiedenen Faktoren beeinflusst, so bspw. von der Anzahl der vorhandenen Lagerelemente oder dem Material bzw. dem Härtegrad der Lagerelemente. Weiter können die Lagerelemente bzw. die Führungselemente jeweils die Vorspannkraft des Schwenkarms bzw. der Werkzeuganordnung definieren. D.h. je weiter die Lagerelemente zusammengepresst sind, desto größer ist die Vorspannkraft. Bei den Führungselementen kann die Vorspannkraft der Lagerelemente je nach Querschnittsverhältnis aus innerer Führungsfläche zu äußerer Führungsfläche erhöht bzw. verringert werden.

Die Erfindung sieht weiter vor, dass der Aufhängungsvorrichtung zumindest ein zusätzliches Führungselement zugeordnet ist. Dieses ist bspw. derart ausgestaltet, dass sich dieses mit dessen innerer Führungsfläche auf der äußeren, bzw. der Flanschfläche des Flanschrohres abstützt und/oder entlang dieser gleitet, wobei hierzu beide Flächen zumindest abschnittweise die weitestgehend gleiche Kontur und/oder Querschnitt aufweisen. Zudem kann vorgesehen sein, dass diese sich mit deren äußerer Führungsfläche auf der inneren, bzw. der Lagerfläche der Lagerabschnitte abstützt und/oder entlang dieser gleitet. Das Führungselement ist also derartig gestaltet, dass es die durch die Quer- bzw. Seitenkräfte auftretende axiale Verschiebung bzw. Verdrehung zu unterbinden vermag und sich die Werkzeuganordnung mittels des Führungselements am Flanschrohr und/oder den Lagerabschnitten abstützen kann. Das Führungselement ist hierzu bspw. als Gleitlagerung ausgeführt, so dass der Werkzeugträger entlang des Führungselements und/oder dem Flanschrohr und/oder den Lagerabschnitten gleiten kann.

Es sei an dieser Stelle bereits erwähnt, dass die Definition einer "zumindest abschnittweise weitestgehend gleicher Kontur und/oder Querschnitt" so zu verstehen ist, dass die Kontur bzw. der Querschnitt des Führungselementes derartig gestaltet ist, dass sich das Führungselement auf den Lagerabschnitten oder dem Flanschrohr abstützen bzw. auf diesen gleiten kann. So wäre dies bspw. auch bei der Kombination aus einem Runden und einem quadratischen Querschnitt bspw. an den Ecken des quadratischen Querschnitts bereits der Fall. Wobei bei einer derartigen Punktlagerung der Verschleiß sehr hoch sein kann.

Um einem axialen Verschieben der Aufhängungsvorrichtung entlang des Schwenkarmträgers entgegen zu wirken, kann der Aufhängevorrichtung und/oder dem Führungselement zumindest ein Befestigungsmittel zugeordnet sein. Das Befestigungsmittel kann mit dem Führungselement ein fest verbundenes Teil bilden. Alternativ könnte das Befestigungsmittel auch derartig ausgestaltet sein, dass es am Flanschrohr bspw. mittels Schrauben oder Schweißung angebracht wird. Hier sind jegliche lösbare und unlösbare Verbindungen möglich und denkbar. Auch könnte das Befestigungsmittel bspw. durch eine Schraubverbindung, welche im oder am Führungselement vorhanden ist, realisiert sein.

Das Führungselement kann an verschiedensten Stellen der Aufhängungsvorrichtung angebracht sein. So wäre es denkbar, ein Führungselement mittig anzuordnen und jeweils links und rechts neben diesem die Lagerelemente. Ebenso könnte das Führungselement auch links und/oder rechts an den Randbereichen der Aufhängungsvorrichtung angeordnet sein. In einer bevorzugten Ausführungsform werden diese links und rechts an den Randbereichen der Aufhängungsvorrichtung angebracht, um somit einen großen Stützabstand zu erreichen, wodurch sich die auf die Führungselemente einwirkenden Kräfte stark reduzieren lassen. Dies ist besonders im Hinblick auf die Wahl des Werkstoffes der Führungselemente wichtig, da somit die Flächenpressung und somit auch der Verschleiß stark minimiert werden kann. Weiter besteht bei einer derartigen Anordnung der Vorteil, dass ein seitliches Herauswandern der elastischen Lagerelemente verhindert, bzw. unterbunden wird.

Eine Weiterbildung der Erfindung sieht vor, dass das wenigstens eine Führungselement als Führungs- und/oder Gleitfläche zumindest eine weitestgehend kreisförmige Kontur aufweist. Die kreisförmige Kontur ist nicht einschränkend zu verstehen, denkbar sind auch alle beliebigen weiteren Ausführungsformen. Das Führungselement dient dazu, die durch die Quer- bzw. Seitenkräfte auftretende axiale Verschiebung bzw. Verdrehung zu unterbinden. Außerdem können sich die Lagerabschnitte mittels des Führungselements am Flanschrohr abstützen.

Um eine einfache Montage zu gewährleisten, kann das Führungselement zweiteilig oder auch mehrteilig gebildet sein. Darüber hinaus kann das Führungselement aus einem inneren Führungssegment und einem äußeren Stützsegment zusammengesetzt werden, wobei auch diese wiederum zwei- oder mehrteilig ausgebildet sein können. Ist die Flanschfläche des Flanschrohres bspw. eckig ausgebildet, dann kann die innere Kontur des inneren Führungssegments und des äußeren Führungssegments entsprechend ausgebildet sein. Gleiches gilt bei einem zylindrischen und jeglichen weiteren Ausgestaltungsformen des Flanschrohrs. Weiter kann das innere Führungssegment eine innere Kontur aufweisen, die zumindest abschnittsweise die weitestgehend gleiche Kontur und/oder Querschnitt wie die Flanschfläche des Flanschrohres aufweist. Das äußere Stützsegment weist hierbei bspw. eine äußere Kontur auf die zumindest abschnittweise die weitestgehend gleiche Kontur und/oder Querschnitt wie die innere Lagerfläche des oberen und unteren Lagerabschnittes aufweist. Darüber hinaus sind beide Segmente so gestaltet, dass diese wiederum eine Gleitfläche bzw. einen Querschnitt aufweisen auf dem diese sich gegenseitig abstützen bzw. gegenseitig gleiten können. Das heißt, das innere Führungssegment weist eine äußere Kontur auf, die weitestgehend identisch zur inneren Kontur des äußeren Stützsegmentes ist. Um eine Schwenkbarkeit und/oder ein gleiten zu gewährleisten, sind diese Konturen vorzugsweise weitgehend kreisförmig ausgebildet. Das Führungssegment ist hierbei mit dem Flanschrohr verbunden und das Stützsegment mit den Lagerabschnitten.

Weiter kann vorgesehen sein, dass dem Führungselement und/oder dem inneren Führungssegment und/oder dem äußeren Stützsegment zumindest ein Absatz zugeordnet ist. Der Absatz dient dazu, ein ggf. axiales Verschieben des aus zwei Segmenten bestehenden Führungselements zu verhindern. Dadurch kann auch gewährleistet werden, dass sich die zwei Segmente des Führungselements stets in einer korrekten Position zueinander befinden. Auch kann der Absatz ein axiales Verschieben der Aufhängungsvorrichtung auf dem Flanschrohr unterbinden.

Weiter können die beiden Segmente bzw. das Führungselement und/oder das Flanschrohr bzw. die Lagerabschnitte aus unterschiedlichen Materialien gebildet sein. Als Materialein können metallische und nichtmetallische Werkstoffe verwendet werden. Auch andere Materialien, insbesondere solche mit guten Führungseigenschaften wären hierbei vorstellbar. Auch denkbar wäre es, dass die Materialien unterschiedliche Härtegrade aufweisen, wodurch wiederum die Führungseigenschaften bzw. die Dauerhaltbarkeit erhöht werden kann. Es kann auch vorgesehen sein, dass das Führungselement und/oder die Lagerabschnitte und/oder das Flanschrohr aus einer Materialpaarung zusammengesetzt sind, die keine Schmierung benötigt. Derartige Materialpaarungen könnten bevorzugt eingesetzt werden. Vorzugsweise weist das Material des Führungselements einen größeren Härtegrad als die elastischen Lagerelemente auf, wodurch zum einen die elastischen Eigenschaften der Lagerung optimiert sind und zum anderen die Führung ausreichend stabil ist.

Wie bereits erwähnt, wird durch eine Anordnung von zwei Führungselementen an den Randbereichen der Aufhängungsvorrichtung der Stützabstand stark vergrößert, wodurch die Kräfte bzw. die auf die Führungselemente einwirkende Flächenpressung reduziert werden kann. Dies wird ebenso durch einen großen Querschnitt des Flanschrohr bzw. des Führungselementes bzw. der Lagerabschnitte erreicht, wodurch auch somit der Verschleiß stark minimiert werden kann, und wodurch auch wiederum die Anforderungen an die Materialpaarungen verringert werden können.

Vorstellbar wäre darüber hinaus wiederum ein Führungselement, welches bspw. ringförmig ausgebildet ist, so dass dieses bspw. nur abschnittweise die im Wesentlichen gleiche Kontur und/oder Querschnitt wie die Flanschfläche des Flanschrohres und/oder die Lagerfläche der Lagerabschnitte aufweist, wobei jedoch eine derartige Ausgestaltung aufgrund der geringen Führungs- und/oder Gleitflächen einem großen Verschleiß unterliegen würde und dadurch ggf. eine Dauerhaltbarkeit nicht gewährleistet werden kann.

Bei vorliegender Erfindung sind die Lagerelemente elastisch ausgebildet. Vorzugsweise werden die Lagerelemente in Form von sog. Gummischnurelementen ausgebildet und eingelegt, so dass über diese Lagerelemente der Schwenkarm radial mit dem Flanschrohr schwenkbeweglich verbunden ist. Die Lagerelemente können wie bereits erwähnt jeweils die Vorspannkraft des Schwenkarms bzw. der Werkzeuganordnung definieren, d.h. je weiter diese zusammengepresst sind, desto größer ist die Vorspannkraft. Bei Verwendung von Führungselementen können diese die Vorspannkraft definieren, d.h. je nach Querschnittsverhältnis aus innerer Führungsfläche zu äußerer Führungsfläche kann die Vorspannkraft der Lagerelemente erhöht bzw. verringert werden.

Es sei an dieser Stelle noch erwähnt, dass neben den vorher beschriebenen Gleitlagerungen auch Wälzlager oder Kugellager oder dergl. Verwendung finden können. Wobei auch diese wiederum eine innere Kontur aufweisen welche zumindest abschnittweise die im Wesentlichen gleiche Kontur und/oder Querschnitt wie die Flanschfläche des Flanschrohres aufweist und/oder eine äußere Kontur aufweisen, welche zumindest abschnittweise die im wesentlichen gleiche Kontur und/oder Querschnitt wie die Lagerfläche der Lagerabschnitte aufweist. Als Führungs- bzw. Gleitfläche dienen hierbei bspw. Kugelelemente.

Im Folgenden sollen Ausführungsbeispiele die Erfindung und deren Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu andern Elementen dargestellt sind. In den Figuren zeigen
Fig. 1 A: eine schematische Perspektivansicht einer Aufhängungsvorrichtung mit Lagerabschnitt und Schwenkarm, mit daran angeordneten Bodenbearbeitungs- und Säwerkzeugen in Form eines sog. Einscheibenschar;
Fig. 1B: eine schematische Explosionsansicht der Aufhängungsvorrichtung gemäß Fig. 1 A;
Fig. 2: eine schematische Detailansicht der Aufhängungsvorrichtung mit einer weiteren Ausführungsvariante der Führungselemente sowie der Befestigungsmittel;
Fig. 3: eine schematische Detailansicht der Aufhängungsvorrichtung im Schnitt gemäß den Figuren 1A, 1B und 2, und
Figuren 4A bis 4D: verschiedene weitere Ausführungs- und Anordnungs- und Anordnungsvarianten der Führungselemente.

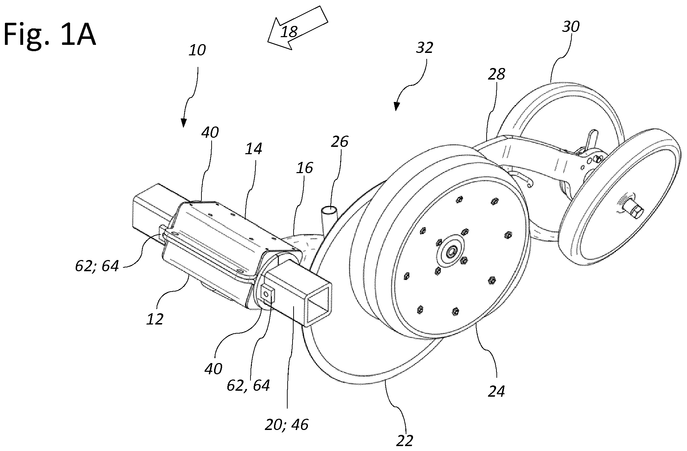

Für gleiche oder gleich wirkende Elemente der Erfindung werden in den Figuren 1A bis 4D jeweils identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung ausgestaltet sein kann und stellen keine abschließende Begrenzung dar.

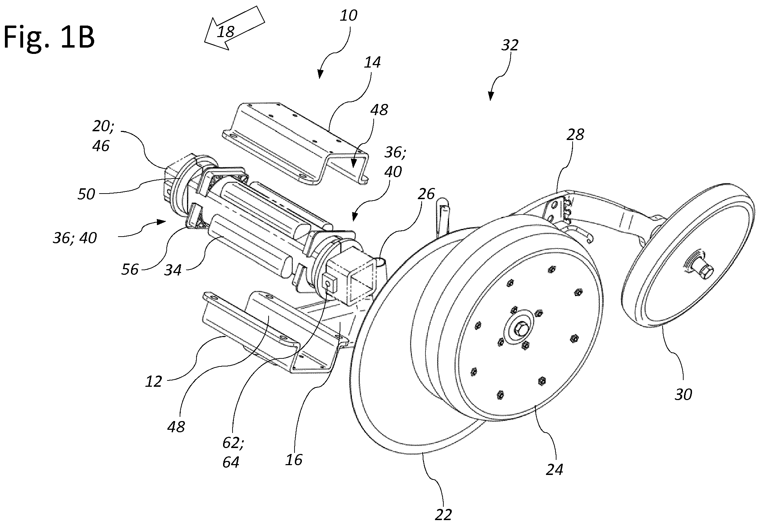

Die Figuren 1A und 1B zeigen eine schematische Perspektivansicht (Fig. 1 A) sowie eine schematische Explosionsansicht (Fig. 1 B) einer Aufhängungsvorrichtung 10 mit einem unteren und einem oberen Lagerabschnitt 12, 14, sowie mit einem mit dem unteren Lagerabschnitt 12 verbundenen Schwenkarm 16. Die Aufhängungsvorrichtung 10 ist an einem sich quer zur Fahrtrichtung 18 ausgerichteten Flanschrohr 20 befestigt. Dieses Flanschrohr 20 kann bspw. Teil einer hier nicht dargestellten landwirtschaftlichen Maschine sein, bei der seitlich zueinander versetzt eine Vielzahl derartiger Aufhängungsvorrichtungen 10 montiert sein können.

Am hinteren Ende des Schwenkarmes 16 sind mittels hier nicht dargestellter Lagerelemente eine Schneid- bzw. Scharscheibe 22, sowie ein Tiefenführungsrad 24 angebracht. Die Schneidscheibe 22 und das Tiefenführungsrad 24 sind hierbei in einem Winkel gegenüber der Fahrtrichtung 18 und in Bezug auf eine senkrechte Ebene zu dieser angeordnet. Entlang der Schneidscheibe 22 erstreckt sich seitlich ein Saatrohr 26. Mittels dieses Saatrohres 26 kann dem mit der Schneidscheibe 22 gezogenem Schlitz das jeweilige auszubringende Saatgut oder dergl. zugeführt werden. Anschließend an das Tiefenführungsrad 24 sind mittels einer Schwinge 28 noch zwei in einem Winkel zueinander angestellte Andruckrollen 30 zum Verschließen des durch die Schneidscheibe 22 gezogenen Schlitzes bzw. der Furche nachgeordnet. Die sich hiermit ergebende Werkzeuganordnung 32 wird im Allgemeinen als Einscheibenschar bezeichnet. Es sei jedoch bereits hier darauf hingewiesen, dass die erfindungsgemäße Aufhängungsvorrichtung auch bei anderen landwirtschaftlichen Werkzeuganordnungen bspw. bei sog. Doppelscheibenscharen, bei Scheiben- und/oder Zinkeneggen oder dergl. Verwendung finden kann.

Das im aufgeführten Beispiel dargestellte Flanschrohr 20 weist eine quadratische Kontur mit abgerundeten Ecken auf, jedoch wären hierbei auch zylindrische oder dreieckige oder dergl. Konturen möglich. Der obere und untere Lagerabschnitt 12, 14 weisen jeweils ebenso eine quadratische Kontur auf, wobei auch hier wiederum, wie beim Flanschrohr 20 andere Konturen vorstellbar sind. Die Lagerabschnitte 12, 14 sind jedoch in deren Querschnitt etwas größer als das Flanschrohr 20. Die Lagerabschnitte 12, 14 bzw. der Schwenkarm 16 ist in einem Winkel von ca. 45° verdreht zum Flanschrohr 20 angeordnet. In den sich somit ergebenden, parallel zum Flanschrohr 20 erstreckenden Freiräumen sind vier elastische Lagerelemente 34, vorzugsweise in Form sog. Gummischnurelemente eingelegt. Über diese Lagerelemente 34 ist der Schwenkarm 16 radial zum Flanschrohr 20 schwenkbeweglich mit diesem verbunden. Diese Schwenkbeweglichkeit wird von verschiedenen Faktoren beeinflusst, so bspw. von der Anzahl vorhandener Lagerelemente 34 oder dem Material bzw. des Härtegrades der Lagerelemente 34, wobei diese bei einer Schwenkbewegung bis zu einem gewissen Grad verformt bzw. zusammengedrückt werden, wie dies in den Figuren 1A bis 4D jeweils andeutungsweise dargestellt wird. Außerdem können die Lagerelemente 34 bzw. deren Elastizitäten und/oder Abmessungen jeweils die Vorspannkraft des Schwenkarms 16 bzw. der Werkzeuganordnung 32 definieren, d.h. je weiter diese zusammengepresst sind, desto größer ist die Vorspannkraft. Bei Verwendung von zusätzlichen Führungselementen 40 können diese die Vorspannkraft definieren, d.h. je nach Querschnittsverhältnis aus innerer Führungsfläche 42 zu äußerer Führungsfläche 44 kann die Vorspannkraft der Lagerelemente 34 erhöht bzw. verringert werden.

Durch die schräge Werkzeuganordnung 32 am Schwenkarm 16 treten in der Praxis relativ hohe Quer- bzw. Seitenkräfte auf, die auf die Aufhängung wirken, und die dazu beitragen, dass die Aufhängungsvorrichtung 10 dazu neigt, sich in axialer Richtung auf dem Flanschrohr 20 zu verschieben bzw. zu verdrehen. Dies kann sich insbesondere bei Werkzeuganordnungen 32, die ein Säschar bilden, negativ auswirken, da somit ggf. eine gewünschte konstante Tiefen- und Seitenführung nicht mehr gewährleistet werden kann.

Um dem entgegenzuwirken, ist der Aufhängungsvorrichtung 10 zumindest ein zusätzliches Führungselement 40 zugeordnet, welches im vorliegenden Ausführungsbeispiel der Figuren 1A bis 3 mehrteilig ausgebildet ist, und das vorzugsweise an dessen Randbereich 36 angeordnet ist. Dieses zusätzliche Führungselement 40 ist vorzugsweise derartig gestaltet, dass sich dieses zumindest abschnittsweise mit dessen innerer Kontur 42 auf der Flanschfläche 46 des Flanschrohres 20 abstützt und/oder dass sich dieses zumindest abschnittsweise mit dessen äußeren Kontur 44 an der Lagerfläche 48 der Lagerabschnitte 12, 14 abstützt. Somit dienen die Innere Kontur 42 und/oder die äußere Kontur 44 jeweils als Führungs- bzw. Gleitfläche. Das wenigstens eine Führungselement 40 ist also derartig gestaltet, dass es die durch die Quer- bzw. Seitenkräfte auftretende axiale Verschiebung bzw. Verdrehung weitgehend unterbindet, und im Ausführungsbeispiel eine Gleitlagerung bildet.

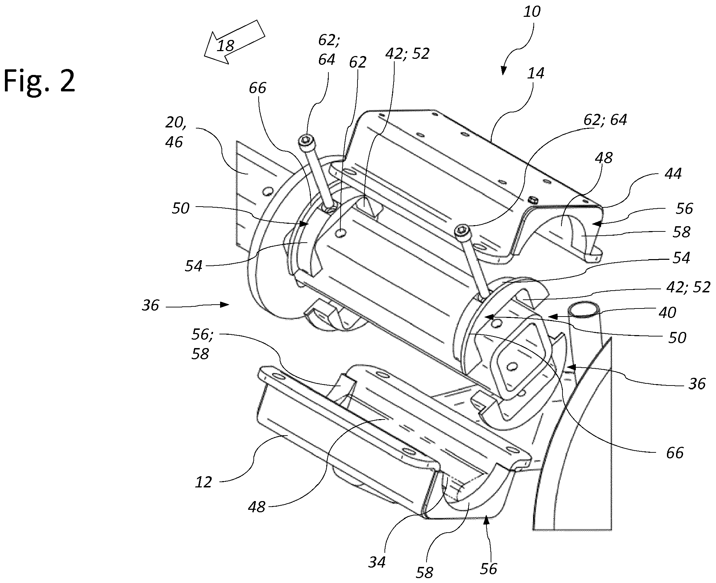

Wie insbesondere die Figuren 1B und 2 erkennen lassen, ist das Führungselement 40 aus zwei Segmenten gebildet, und zwar aus einem inneren Führungssegment 50 und aus einem äußeren Stützsegment 56, wobei diese wiederum zweiteilig ausgebildet sind, um somit eine erleichterte Montage zu ermöglichen. Hierbei ist das Führungselement 40 derartig gestaltetet, dass sich das Führungssegment 50 mit dessen innerer Kontur 52 an der Flanschfläche 46 des Flanschrohres 20 abstützt, sowie dass sich das Stützsegment mit dessen äußerer Kontur 60 an der Lagerfläche 48 der oberen und unteren Lagerabschnitte 12, 14 abstützt. Wiederum sind das Führungs- und das Stützsegment 50, 56 so gestaltet, das diese jeweils eine Gleitfläche 54, 58 aufweisen, so dass sich diese gegenseitig abstützen können, und zwar derartig, dass sich die äußere Kontur 54 des Führungssegmentes 50 auf der inneren Kontur 58 des Stützsegmentes abstützt.

Die Führungselemente 40 bzw. das Führungs- und das Stützsegment 50, 56 und das Flanschrohr 20 sowie auch die Lagerabschnitte 12, 14 sind vorzugsweise aus unterschiedlichem Material gebildet, so bspw. aus metallischen und nicht metallischen Werkstoffen. In einer bevorzugten Ausführungsform ist das Führungselement 40 bzw. die Materialpaarung zwischen Führungselementen 40 und Flanschrohr 20 und/oder Lagerabschnitte 12, 14 aus einer derartigen Materialpaarung gebildet, dass keine zusätzliche Schmierung benötigt wird.

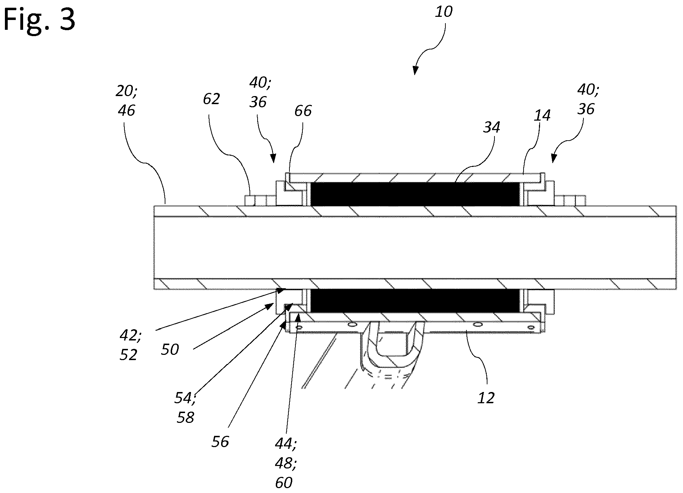

Weiter zeigen die Figuren 1A und 1B, dass den Führungselementen 40 jeweils zusätzliche Befestigungsmittel 62 zugeordnet sind. Mittels dieser Befestigungsmittel 62 kann die axiale Verschiebung der Aufhängungsvorrichtung 10 auf dem Flanschrohr 20 unterbunden werden. Hierzu kann das Befestigungsmittel 62 bspw. unmittelbar mit dem Führungselement 40 verbunden sein bzw. Teil dieses sein (siehe hierzu Fig. 2). Ebenso wäre es jedoch auch vorstellbar, dass das Befestigungsmittel 62 mit dem Flanschrohr 20 bspw. mittels Schweißung oder mittels Schrauben 64 verbunden ist (vergl. hierzu Fig. 3).

Die Fig. 2 stellt diesbezüglich noch eine weitere Ausführungsvariante dar, bei dieser erfolgt die axiale Sicherung der Aufhängungsvorrichtung 10 mittels einer Schraube 64, mittels welcher das Führungssegment 50 mit dem Flanschrohr 20 verbunden wird, und wobei das Stützsegment 56 ebenfalls mittels einer weiteren Schraube 64 mit dem Lagerabschnitt verbunden ist. Um ein axiales Verschieben zu vermeiden oder zu verhindern, ist im Ausführungsbeispiel der Fig. 2 dem Führungssegment 50 ein äußerer Absatz 66 zugeordnet, der ein axiales Verschieben unterbindet, und dafür sorgt, dass das Führungssegment 50 und das Stützsegment 56 jeweils exakt zueinander positioniert sind.

In einer schematischen Detailansicht der Aufhängungsvorrichtung 10 im Schnitt gemäß der Figuren 1A, 1B und 2 zeigt die Fig. 3 die Wirkungsweise des wenigstens einen zusätzlichen Führungselementes 40. Zunächst ist der Aufhängungsvorrichtung 10 an dessen beiden seitlichen Randbereichen 36 jeweils ein Führungselement 40 zugeordnet. Das Führungselement 40 ist hierbei zweiteilig ausgebildet und besteht aus einem Führungssegment 50 und einem Stützsegment 56. Die innere Kontur 52 des Führungssegmentes 50 weist hierbei zumindest abschnittweise die im Wesentlichen gleiche Kontur und/oder Querschnitt wie die Flanschfläche 46 des Flanschrohres 20 auf. Weiter weist die äußere Kontur 60 des Stützsegmentes 56 die im Wesentlichen zumindest abschnittweise gleiche Kontur und/oder Querschnitt wie die Lagerfläche 48 der Lagerabschnitte 12, 14 auf, womit ein seitliches Verdrehen der Aufhängungsvorrichtung 10 effektiv vermieden bzw. unterbunden werden kann. Das Stützsegment 56 und das Führungssegment 50 besitzen jeweils wiederum eine innere 58 bzw. eine äußere Kontur 54, die als gegenseitige Gleitflächen dienen und die ebenfalls so gebildet sind, dass sich die zwei Teile gegenseitig abstützen können, zudem ist diese jeweils weitgehend kreisförmig ausgebildet, um ein Verschwenken bzw. ein gleiten zu ermöglichen.

Durch die gezeigte Anordnung entsprechend Fig. 3 kann ein großer Stützabstand zwischen den Führungselementen 40 erreicht werden. Außerdem wird durch den großen Durchmesser der Führungselemente 40 erreicht, dass auf die Führungselemente 40 jeweils relativ geringe Flächenpressungen wirken, wodurch der Verschleiß und der Wartungsaufwand deutlich reduziert werden. Zusätzlich hierzu ist es auch noch vorstellbar, die Materialpaarungen der Führungselemente 40 derartig zu wählen, dass diese ebenso keiner Wartung bzw. Schmierung bedürfen bzw. dass auch hierdurch der Verschleiß minimiert wird.

Die Fig. 3 zeigt weiterhin, dass den Führungselementen 40 jeweils zusätzliche Befestigungsmittel 62 zugeordnet sind. Mittels dieser kann die axiale Verschiebung der Aufhängungsvorrichtung 10 auf dem Flanschrohr unterbunden werden. Hierzu kann das Befestigungsmittel 62 bspw. unmittelbar mit dem Führungselement 40 verbunden, bzw. Teil dieser sein bzw. mit dieser eine Einheit bilden (siehe hierzu Fig. 2). Ebenso wäre es jedoch auch vorstellbar, dass das Befestigungsmittel 62 mit dem Flanschrohr bspw. mittels Schweißung oder wiederum mittels Schrauben verbunden ist.

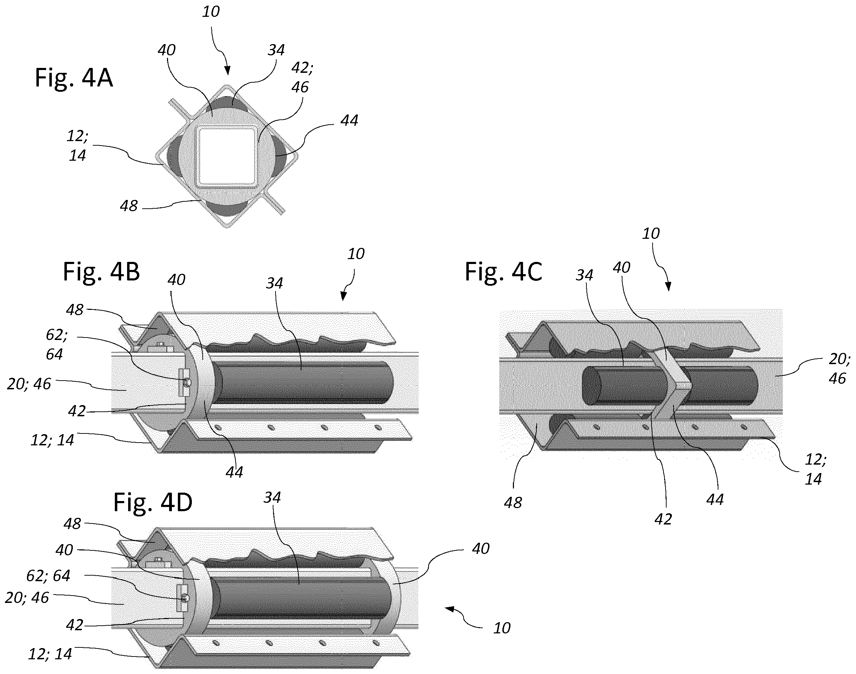

Weitere Ausführungsbeispiele der Erfindungsgemäßen Aufhängungsvorrichtung 10 gehen aus der Fig. 4 (Figuren 4A bis 4D) hervor. Zunächst zeigt die Fig. 4A eine weitere Ausführungsform einer Aufhängungsvorrichtung 10, bei der das Führungselement 40 einteilig und ringförmig ausgebildet ist. Die innere Kontur 42 des Führungselementes 40 entspricht wieder der im Wesentlichen zumindest abschnittweise gleichen Kontur und/oder Querschnitt wie die Flanschfläche 46 des Flanschrohres 20. Die äußere Kontur 44 des Führungselementes 40 entspricht im Wesentlichen der zumindest abschnittweise gleichen Kontur und/oder Querschnitt wie die Lagerfläche 48 der Lagerabschnitte 12, 14. Um eine Bewegung der Lagerabschnitte 12, 14 gegenüber dem Schwenkarmträgers zu ermöglichen, ist die äußere Kontur 44 als Gleitfläche kreisförmig ausgebildet.

Die Figuren 4B bis 4D zeigen zur Vervollständigung weitere Anordnungsmöglichkeiten des wenigstens einem Führungselement 40 in der erfindungsgemäßen Aufhängungsvorrichtung 10 sowie weitere Varianten der Befestigungselemente 62 welche ebenso unter den Schutzbereich dieser Erfindung fallen. Weiter zeigt die Figur 4C eine weitere Ausgestaltungsvariante des Führungselements 40 wobei dieses eine innere Kontur 42 als Führungs- bzw. Gleitfläche aufweist welche einen im wesentlichen runden Querschnitt bzw. zumindest abschnittweise die im Wesentlichen gleiche Kontur und/oder Querschnitt wie die Flanschfläche 46 des Flanschrohres aufweist und eine äußere Kontur 44 aufweist, die zumindest abschnittweise die im Wesentlichen gleiche Kontur und/oder Querschnitt wie die Lagerfläche 48 der Lagerabschnitte 12, 14 aufweist.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 10: Aufhängungsvorrichtung
- 12: Unterer Lagerabschnitt
- 14: Oberer Lagerabschnitt
- 16: Schwenkarm
- 18: Fahrtrichtung
- 20: Flanschrohr
- 22: Schneidscheibe; Scharscheibe
- 24: Tiefenführungsrad
- 26: Saatrohr
- 28: Schwinge
- 30: Andruckrolle
- 32: Werkzeuganordnung
- 34: Lagerelement
- 36: Randbereich
- 40: Führungselement
- 42: Innere- Kontur / Führungsfläche / Gleitfläche
- 44: Äußere- Kontur / Führungsfläche / Gleitfläche
- 46: Flanschfläche
- 48: Lagerfläche
- 50: Führungssegment
- 52: Innere Kontur
- 54: Äußere Kontur / Gleitfläche
- 56: Stützsegment
- 58: Innere Kontur / Gleitfläche
- 60: Äußere Kontur
- 62: Befestigungsmittel
- 64: Schraube
- 66: Absatz

## Patentansprüche

1. Aufhängungsvorrichtung (10) einer landwirtschaftlichen Maschine zur Montage und schwenkbaren und/oder elastischen Lagerung einer Werkzeuganordnung (32) zur Bodenbearbeitung und/oder Aussaat, mit zumindest einem die Werkzeuganordnung (32) tragenden Schwenkarm (16), der mittels wenigstens eines Lagerabschnittes (12, 14) elastisch und/oder schwenkbar an einem sich vorzugsweise in etwa quer zu einer Arbeitsrichtung der landwirtschaftlichen Maschine erstreckenden Trag- oder Flanschrohr (20) gelagert ist, wobei der Lagerabschnitt (12, 14) das Trag- oder Flanschrohr (20), das Teil der landwirtschaftlichen Maschine und/oder Teil einer Aufhängung oder Tragevorrichtung der landwirtschaftlichen Maschine ist, umfangsseitig und in etwa koaxial umgreift, wobei zwischen dem Lagerabschnitt (12, 14) und dem davon umgriffenen Abschnitt des Flanschrohres (20) zumindest ein elastisches Lagerelement (34) vorgesehen ist, das sich mit seiner Längsachse im Wesentlichen parallel zu einer Schwenkachse des Schwenkarmes (16) und einer Längserstreckungsrichtung bzw. Längsachse des Flanschrohres (20) erstreckt und durch Schwenkbewegungen des Schwenkarmes (16) eine zumindest teilweise elastische Verformung erfährt, und wobei der Aufhängungsvorrichtung (10) zumindest ein zusätzliches Führungselement (40) zugeordnet ist, das ein- oder mehrteilig ausgebildet ist und zumindest eine Führungs- und/oder Gleitfläche (42; 44; 54; 58) zur seitlichen Abstützung und/oder Führung der Werkzeuganordnung (32) aufweist.

2. Aufhängungsvorrichtung nach Anspruch 1, bei der das Führungselement (40) eine innere Kontur und/oder Führungs- und/oder Gleitfläche (42) aufweist, welche derartig gestaltet ist, dass die Werkzeuganordnung entlang dieser und der Flanschfläche (46) des Flanschrohres (20) radial verschwenken und gleiten kann und/oder dass das Führungselement (40) eine äußere Kontur und/oder Führungs- und/oder Gleitfläche (44) aufweist, welche derartig gestaltet ist, dass die Werkzeuganordnung (32) entlang dieser und der Lagerfläche (48) der Lagerabschnitte (12; 14) radial verschwenken und gleiten kann.

3. Aufhängungsvorrichtung nach Anspruch 1 oder 2, bei der das wenigstens eine Führungselement (40) und/oder das Flanschrohr (20) und/oder die Lagerabschnitte (12; 14) als Führungs- und/oder Gleitfläche (42; 44; 54; 58) zumindest eine abschnittweise weitgehend kreisförmige Kontur aufweisen.

4. Aufhängungsvorrichtung nach einem der Ansprüche 1 bis 3, bei der das zumindest eine zusätzliche Führungselement (40) eine innere Kontur (42) aufweist, die zumindest abschnittsweise eine im Wesentlichen gleiche Kontur und/oder einen im Wesentlichen gleichen Querschnitt wie die Flanschfläche (46) des Flanschrohres (20) aufweist und/oder dass das zumindest eine zusätzliche Führungselement (40) eine äußere Führungsfläche (44) aufweist, die zumindest abschnittsweise eine im Wesentlichen gleiche Kontur und/oder Querschnitt wie die Lagerfläche (48) der Lagerabschnitte (12, 14) aufweist.

5. Aufhängungsvorrichtung nach einem der Ansprüche 1 bis 4, bei der das Führungselement (40) aus zwei Segmenten, vorzugsweise einem Führungssegment (50) und einem Stützsegment (56) zusammengesetzt ist, wobei diese Segmente (50, 56) jeweils ein- oder mehrteilig ausgebildet sind.

6. Aufhängungsvorrichtung nach Anspruch 5, bei der das innere Führungssegment (50) eine innere Kontur (52) aufweist, die zumindest abschnittsweise eine im Wesentlichen gleiche Kontur und/oder einen im Wesentlichen gleichen Querschnitt wie die Flanschfläche (46) des Flanschrohres (20) aufweist und/oder wobei das äußere Stützsegment (56) eine äußere Kontur (58) aufweist, die zumindest abschnittsweise die im Wesentlichen gleiche Kontur und/oder den im Wesentlichen gleichen Querschnitt wie die Lagerfläche (48) der Lagerabschnitte (12; 14) aufweist.

7. Aufhängungsvorrichtung nach Anspruch 5 oder 6, bei der das innere Führungssegment (50) und das äußere Stützsegment (56) jeweils einen zumindest abschnittsweise im Wesentlichen identischen Querschnitt aufweisen, welcher die Führungs- und Gleitfläche (54; 58) bildet, wobei der Querschnitt so gestaltet ist, dass das Stützsegment (56) sich auf dem Führungssegment (50) abstützt und entlang dieses verschwenken und gleiten kann, wobei der Querschnitt der äußeren Kontur (54) des Führungssegments (50) der inneren Kontur (58) des Stützsegments (56) entspricht, und wobei dieser Querschnitt zumindest abschnittweise weitestgehend kreisförmig ausgebildet ist.

8. Aufhängungsvorrichtung nach einem der Ansprüche 5 bis 7, bei der dem Führungselement (40) und/oder dem Führungssegment (50) und/oder dem Stützsegment (56) zumindest ein Absatz (66) zugeordnet ist.

9. Aufhängungsvorrichtung nach einem der Ansprüche 5 bis 8, bei der das Führungselement (40) und/oder das Führungssegment (50) und/oder das Stützsegment (56) die Lagerabschnitte (12, 14) und/oder das Flanschrohr (20) jeweils aus unterschiedlichen Materialien gefertigt bzw. gebildet sind.

10. Aufhängungsvorrichtung nach einem der Ansprüche 1 bis 9, bei der das Führungselement (40) und/oder die Lagerabschnitte (12, 14) und/oder das Flanschrohr (20) aus einer selbstschmierenden Materialpaarung bzw. aus einer Materialpaarung zusammengesetzt sind, die keine Schmierung benötigt.

11. Aufhängungsvorrichtung nach einem der Ansprüche 1 bis 10, bei der das Führungselement (40) einen größeren Härtegrad als das elastische Lagerelement (34) aufweist.

12. Aufhängungsvorrichtung nach einem der Ansprüche 1 bis 11, bei der eine Vorspannkraft der Lagerelemente (34) durch das Verhältnis aus innerer Führungsfläche (42) zu äußerer Führungsfläche (44) des Führungselement (40) definiert ist bzw. wird.

13. Aufhängungsvorrichtung nach einem der Ansprüche 1 bis 12, wobei dieser und/oder dem Führungselement (40) Befestigungsmittel (62) zugeordnet sind.

14. Aufhängungsvorrichtung nach Anspruch 13, bei der das Führungselement (40) und das Befestigungsmittel (62) eine Einheit bilden.

15. Aufhängungsvorrichtung nach einem der Ansprüche 1 bis 14, bei der das wenigstens eine Führungselement (40) mittig und/oder an einem linken und/oder rechten Randbereich (36) der Aufhängungsvorrichtung (10) angeordnet ist.

16. Aufhängungsvorrichtung nach einem der vorhergehenden Ansprüche, bei der das wenigstens eine Führungselement (40) durch ein Wälzlager oder Kugellager ausgebildet ist.

17. Aufhängungsvorrichtung nach einem der vorhergehenden Ansprüche, bei der die Werkzeuganordnung (32) ein Einscheibenschar und/oder ein Doppelscheibenschar ist bzw. trägt und/oder einen Zinkenhalter und/oder einen Sechhalter bildet.

## Claims

1. A suspension device (10) of an agricultural machine, the suspension device being intended for the mounting and the pivotable and/or elastic bearing of an implement arrangement (32) for tilling and/or sowing, with at least one pivot arm (16) carrying the implement arrangement (32), which pivot arm (16) is elastically and/or pivotably mounted by means of at least one bearing section (12, 14) at a carrier tube or flange tube (20) extending preferably approximately transversely to a work direction of the agricultural machine, wherein the bearing section (12, 14) surrounds the carrier tube or flange tube (20) circumferentially and approximately coaxially, which carrier tube or flange tube (20) is a part of the agricultural machine and/or a part of a suspension or of a carrying device of the agricultural machine, wherein at least one elastic bearing element (34) is provided between the bearing section (12, 14) and the section of the flange tube (20) surrounded thereby, which elastic bearing element (34) extends with its longitudinal axis essentially parallel to a pivoting axis of the pivot arm (16) and to a longitudinal extension direction and/or to a longitudinal axis of the flange tube (20), and which undergoes an at least partial elastic deformation by pivoting motions of the pivot arm (16), and wherein at least one additional guide element (40) is associated with the suspension device (10), which guide element is formed in a single part or in multiple parts and has at least one guide surface and/or slide surface (42; 44; 54; 58) for the lateral support and/or guidance of the implement arrangement (32).

2. The suspension device as recited in claim 1, in which the guide element (40) has an inner contour and/or a guide surface and/or a slide surface (42), which is formed such that the implement arrangement can pivot radially and slide along this inner contour and/or guide surface and/or slide surface (42) and along the flange surface (46) of the flange tube (20), and/or in which the guide element (40) has an outer contour and/or a guide surface and/or a slide surface (44), which is formed such that the implement arrangement (32) can pivot radially and slide along this outer contour and along the bearing surface (48) of the bearing sections (12; 14).

3. The suspension device as recited in claim 1 or 2, in which the at least one guide element (40) and/or the flange tube (20) and/or the bearing sections (12; 14) as guide surface and/or slide surface (42; 44; 54; 58) have an at least sectionally largely circular contour.

4. The suspension device as recited in one of the claims 1 to 3, in which the at least one additional guide element (40) has an inner contour (42), which at least sectionally has a contour and/or a cross section that is essentially the same as the contour and/or cross section of the flange surface (46) of the flange tube (20), and/or in which the at least one additional guide element (40) has an outer guide surface (44), which at least sectionally has a contour and/or cross section that is essentially the same as the contour and/or cross section of the bearing surface (48) of the bearing sections (12, 14).

5. The suspension device as recited in one of the claims 1 to 4, in which the guide element (40) is composed of two segments, preferably of one guide segment (50) and one support segment (56), wherein these segments (50, 56) are each formed in a single part or in multiple parts.

6. The suspension device as recited in claim 5, in which the inner guide segment (50) has an inner contour (52), which at least sectionally has a contour and/or a cross section that is essentially the same as the contour and/or cross section of the flange surface (46) of the flange tube (20), and/or wherein the outer support segment (56) has an outer contour (58), which at least sectionally has a contour and/or cross section that is essentially the same as the contour and/or cross section of the bearing surface (48) of the bearing sections (12; 14).

7. The suspension device as recited in claim 5 or 6, in which the inner guide segment (50) and the outer support segment (56) each have an at least sectionally essentially identical cross section, which forms the guide surface and slide surface (54; 58), wherein the cross section is designed such that the support segment (56) supports itself upon the guide segment (50) and can pivot and slide along this guide segment (50), wherein the cross section of the outer contour (54) of the guide segment (50) corresponds to the inner contour (58) of the support segment (56), and wherein this cross section is formed to be at least sectionally to the greatest possible extent circular.

8. The suspension device as recited in one of the claims 5 to 7, in which at least one shoulder (66) is associated with the guide element (40) and/or to the guide segment (50) and/or to the support segment (56).

9. The suspension device as recited in one of the claims 5 to 8, in which the guide element (40) and/or the guide segment (50) and/or the support segment (56), the bearing sections (12, 14) and/or the flange tube (20) are each produced from different materials or formed from different materials, as the case may be.

10. The suspension device as recited in one of the claims 1 to 9, in which the guide element (40) and/or the bearing sections (12, 14) and/or the flange tube (20) are composed of a self-lubricating material combination or of a material combination that needs no lubrication, as the case may be.

11. The suspension device as recited in one of the claims 1 to 10, in which the guide element (40) has a greater degree of hardness than the elastic bearing element (34).

12. The suspension device as recited in one of the claims 1 to 11, in which a preload force of the bearing elements (34) is or will be defined, as the case may be, by the ratio of inner guide surface (42) to outer guide surface (44) of the guide element (40).

13. The suspension device as recited in one of the claims 1 to 12, wherein attaching means (62) are associated with this suspension device (10) and/or to the guide element (40).

14. The suspension device as recited in claim 13, in which the guide element (40) and the attaching means (62) form a unit.

15. The suspension device as recited in one of the claims 1 to 14, in which the at least one guide element (40) is arranged centrally and/or at the left and/or at the right edge section (36) of the suspension device (10).

16. The suspension device as recited in one of the previous claims, in which the at least one guide element (40) is formed by a rolling bearing or by a ball bearing.

17. The suspension device as recited in one of the previous claims, in which the implement arrangement (32) is or, as the case may be, carries a single disk coulter and/or a double disk coulter, and/or forms a tooth holder and/or a coulter holder.

## Revendications

1. Dispositif d'accrochage (10) d'une machine agricole destiné au montage et au support pivotant et/ou élastique d'un ensemble d'outils (32) servant au travail du sol et/ou à l'ensemencement, comprenant au moins un bras de pivotement (16) qui supporte ledit ensemble d'outils (32) et qui est supporté, au moyen d'au moins un tronçon de support (12, 14), de manière élastique et/ou à pivotement sur un tube porteur ou à brides (20) s'étendant de préférence de manière à peu près transversale par rapport à une direction de travail de la machine agricole, dans lequel ledit tronçon de support (12, 14) embrasse circonférentiellement et d'une manière à peu près coaxiale le tube porteur ou à brides (20) qui fait partie de la machine agricole et/ou fait partie d'une suspension ou d'un dispositif porteur de la machine agricole, dans lequel au moins un élément de support (34) élastique est prévu entre le tronçon de support (12, 14) et le tronçon du tube à brides (20), qui est embrassé par celui-ci, élément de support qui s'étend, par son axe longitudinal, pour l'essentiel parallèlement à un axe de pivotement du bras de pivotement (16) et à une direction d'extension longitudinale ou bien un axe longitudinal du tube à brides (20) et qui subit, dû à des mouvements de pivotement du bras de pivotement (16), une déformation élastique au moins en partie, et dans lequel audit dispositif d'accrochage (10) est associé au moins un élément de guidage (40) supplémentaire qui est réalisé en une seule pièce ou en plusieurs pièces et présente au moins une surface de guidage et/ou de glissement (42; 44; 54; 58) destinée à appuyer et/ou guider latéralement ledit ensemble d'outils (32).

2. Dispositif d'accrochage selon la revendication 1, dans lequel ledit élément de guidage (40) présente un contour et/ou une surface de guidage et/ou de glissement (42) intérieur(e) qui est configuré(e) de manière à ce que ledit ensemble d'outils puisse pivoter et glisser radialement le long de celui-ci/celle-ci et de la surface de bride (46) du tube à brides (20), et/ou dans lequel ledit élément de guidage (40) présente un contour et/ou une surface de guidage et/ou de glissement (44) extérieur(e) qui est configuré(e) de manière à ce que ledit ensemble d'outils (32) puisse pivoter et glisser radialement le long de celui-ci/celle-ci et de la surface de support (48) des tronçons de support (12; 14).

3. Dispositif d'accrochage selon la revendication 1 ou 2, dans lequel ledit au moins un élément de guidage (40) et/ou ledit tube à brides (20) et/ou les tronçons de support (12; 14) présentent, en tant que surface de guidage et/ou de glissement (42; 44; 54; 58), un contour qui, au moins par sections, est dans une large mesure circulaire.

4. Dispositif d'accrochage selon l'une quelconque des revendications 1 à 3, dans lequel ledit au moins un élément de guidage (40) supplémentaire présente un contour intérieur (42) qui, au moins par sections, présente un contour pour l'essentiel identique et/ou une section transversale pour l'essentiel identique à celui/celle de la surface de bride (46) du tube à brides (20), et/ou dans lequel ledit au moins un élément de guidage (40) supplémentaire présente une surface de guidage (44) extérieure qui, au moins par sections, présente un contour pour l'essentiel identique et/ou une section transversale pour l'essentiel identique à celui/celle de la surface de support (48) des tronçons de support (12, 14).

5. Dispositif d'accrochage selon l'une quelconque des revendications 1 à 4, dans lequel ledit élément de guidage (40) se compose de deux segments, de préférence d'un segment de guidage (50) et d'un segment d'appui (56), ces segments (50, 56) étant réalisés chacun en une seule pièce ou en plusieurs pièces.

6. Dispositif d'accrochage selon la revendication 5, dans lequel ledit segment de guidage (50) intérieur présente un contour intérieur (52) qui, au moins par sections, présente un contour pour l'essentiel identique et/ou une section transversale pour l'essentiel identique à celui/celle de la surface de bride (46) du tube à brides (20), et/ou dans lequel le segment d'appui (56) extérieur présente un contour extérieur (58) qui, au moins par sections, présente le contour pour l'essentiel identique et/ou la section transversale pour l'essentiel identique à celui/celle de la surface de support (48) des tronçons de support (12; 14).

7. Dispositif d'accrochage selon la revendication 5 ou 6, dans lequel ledit segment de guidage (50) intérieur et le segment d'appui (56) extérieur présentent chacun une section transversale pour l'essentiel identique, au moins par sections, qui forme la surface de guidage et de glissement (54; 58), dans lequel la section transversale est configurée de manière à ce que le segment d'appui (56) prenne appui sur le segment de guidage (50) et puisse pivoter et glisser le long de celui-ci, dans lequel la section transversale du contour extérieur (54) du segment de guidage (50) correspond au contour intérieur (58) du segment d'appui (56), et dans lequel cette section transversale est réalisée, au moins par sections, dans une large mesure circulairement.

8. Dispositif d'accrochage selon l'une quelconque des revendications 5 à 7, dans lequel au moins un gradin (66) est associé à l'élément de guidage (40) et/ou au segment de guidage (50) et/ou au segment d'appui (56).

9. Dispositif d'accrochage selon l'une quelconque des revendications 5 à 8, dans lequel ledit élément de guidage (40) et/ou ledit segment de guidage (50) et/ou ledit segment d'appui (56), lesdits tronçons de support (12, 14) et/ou ledit tube à brides (20) sont fabriqués ou bien réalisés chacun à partir de matériaux différents.

10. Dispositif d'accrochage selon l'une quelconque des revendications 1 à 9, dans lequel l'élément de guidage (40) et/ou les tronçons de support (12, 14) et/ou le tube à brides (20) sont composés d'une paire de matériaux autolubrifiante ou bien d'une paire de matériaux qui n'a pas besoin de lubrification.

11. Dispositif d'accrochage selon l'une quelconque des revendications 1 à 10, dans lequel ledit élément de guidage (40) présente un degré de dureté supérieur à celui de l'élément de support (34) élastique.

12. Dispositif d'accrochage selon l'une quelconque des revendications 1 à 11, dans lequel une force de précontrainte des éléments de support (34) est ou bien sera définie par le rapport de la surface intérieure de guidage (42) à la surface extérieure de guidage (44) de l'élément de guidage (40).

13. Dispositif d'accrochage selon l'une quelconque des revendications 1 à 12, dans lequel des moyens de fixation (62) sont associés à celui-ci et/ou à l'élément de guidage (40).

14. Dispositif d'accrochage selon la revendication 13, dans lequel l'élément de guidage (40) et le moyen de fixation (62) forment une unité.

15. Dispositif d'accrochage selon l'une quelconque des revendications 1 à 14, dans lequel ledit au moins un élément de guidage (40) est disposé de manière centrale et/ou sur une zone marginale (36) gauche et/ou droite du dispositif d'accrochage (10).

16. Dispositif d'accrochage selon l'une quelconque des revendications précédentes, dans lequel ledit au moins un élément de guidage (40) est réalisé par un palier à roulement ou un roulement à billes.

17. Dispositif d'accrochage selon l'une quelconque des revendications précédentes, dans lequel ledit ensemble d'outils (32) est ou bien porte un soc monodisque et/ou un soc double disque et/ou forme une barre porte-dents et/ou un support de coutre.
